# EUROPÄISCHE PATENTSCHRIFT

(11) **EP 2 436 557 B1**
(45) Veröffentlichungstag und Bekanntmachung des Hinweises auf die Patenterteilung: **04.07.2018**
(21) Anmeldenummer: 11176134.2
(22) Anmeldetag: 01.08.2011
(51) Int. Cl.: B60Q 1/068

(54) **Verstellvorrichtung zum Verstellen eines optisch relevanten Bauteils eines Fahrzeugscheinwerfers**
Adjustment device for adjusting an optically relevant component of a vehicle headlamp
Dispositif de réglage d'un composant optique d'un phare de véhicule

(30) Priorität: 30.09.2010 AT 16402010
(43) Veröffentlichungstag der Anmeldung: 04.04.2012
(73) Patentinhaber: ZKW Group GmbH, 3250 Wieselburg (AT)
(72) Erfinder: Krenn, Irmgard, 3251 Purgstall/Erlauf (AT)
(74) Vertreter: Patentanwaltskanzlei Matschnig & Forsthuber OG

(56) Entgegenhaltungen:
- EP-A1- 0 887 228
- DE-A1- 3 841 663
- DE-A1- 10 211 816
- US-A- 4 333 131

## Beschreibung

Die Erfindung betrifft eine Verstellvorrichtung zum Verstellen von zumindest einem optisch relevanten Bauteil eines Fahrzeugscheinwerfers, wie z.B. eines Reflektors, einer Linse oder eines Lichtmoduls des Fahrzeugscheinwerfers, bzw. zum Verstellen eines das zumindest eine optisch relevante Bauteil aufnehmenden Tragrahmens, wobei das optisch relevante Bauteil, beispielsweise mittels des Tragrahmens, mittels eines Hauptgelenkes um zwei normale aufeinander stehende Achsen, z.B. eine horizontale Achse und eine vertikale Achse, welche sich in dem Hauptgelenk schneiden, verschwenkbar gelagert ist.

Außerdem betrifft die Erfindung einen Fahrzeugscheinwerfer mit zumindest einer solchen Verstellvorrichtung.

Nach dem Einbau eines Fahrzeugscheinwerfers in ein Kraftfahrzeug ist es notwendig und gesetzlich vorgeschrieben, eine Justage des von dem Scheinwerfer erzeugten Lichtbildes vorzunehmen, damit das von dem Kraftfahrzeugscheinwerfer erzeugte Lichtbild den gesetzlichen Anforderungen entspricht. Dazu werden optisch relevante Bauteile, wie etwa Lichtmodule, Reflektoren, Linsen etc. entsprechend verschwenkt, um das Lichtbild in eine "Grundstellung" zu bringen. Beispielsweise ist ein Lichtmodul eines Scheinwerfers, etwa ein Abblendlichtmodul, in einem Tragrahmen montiert und dieser Tragrahmen ist in dem Scheinwerfer verschwenkbar montiert. Umfasst der Scheinwerfer zwei oder mehr Lichtmodule (Fernlicht, Abblendlicht, ....), so sind diese ebenfalls in der Regel auf einem gemeinsamen Tragrahmen befestigt, welcher dann bei der Justage verschwenkt wird.

Grundsätzlich ist unter "optisch relevantes Bauteil" jedes Bauteil zu verstehen, das einen Einfluss auf die vor ein Kraftfahrzeug abgebildete Lichtverteilung ausübt insofern, als ein Verstellen/Verschwenken dieses Bauteiles die Lichtverteilung verändert. Beispiele für solche optisch relevanten Bauteile sind Blenden(anordnungen), Lichtquellen, Reflektoren, Linsen oder ganze Lichtmodule. Die hier vorgestellte Verstellvorrichtung ist prinzipiell zur Verstellung für alle diese Bauteile geeignet, wobei in erster Linie aber ein Einsatz zum Verstellen von Reflektoren oder Linsen und insbesondere einem oder mehreren Lichtmodulen, welche(s) vorzugsweise in einem Tragrahmen angeordnet ist/sind, angedacht ist

Zum Verschwenken von optisch relevanten Bauteilen eines Scheinwerfers sind aus dem Stand der Technik eine Vielzahl von Vorrichtungen bekannt. Typische Nachteile bekannter Verstellvorrichtungen sind, dass einzelne Verstellelemente, mittels welcher das Bauteil z.B. vertikal bzw. horizontal um Achsen verschwenkt werden können, räumlich getrennt und über den Scheinwerfer verteilt sind, dass meist der Einbau dieser Verstellvorrichtungen in den Scheinwerfer kompliziert und aufwändig ist, und dass teilweise komplizierte Mechanismen mit Umlenkungen etc. notwendig sind. Zum Verschwenken sind zwei Einstellelemente, üblicherweise in Form von Einstellrädern vorgesehen, durch Drehen von einem Einstellrad erfolgt ein Verschwenken um die Horizontalachse. Zum Verschwenken um die vertikale Achse ist es allerdings notwendig, beide Einstellräder zu drehen, was für den Benutzer kompliziert und langwierig ist.

Eine eingangs erwähnte Vorrichtung ist beispielsweise aus der DE 10 2008 033 515 A1 bekannt. Eine gattungsgemäße Verstellvorrichtung ist aus der US 4 333 131 bekannt.

Es ist eine Aufgabe der Erfindung, eine Verstellvorrichtung zu schaffen, welche die oben genannten Nachteile beseitigt.

Diese Aufgabe wird mit einer eingangs erwähnten Vorrichtung dadurch gelöst, dass erfindungsgemäß das optisch relevante Bauteil, beispielsweise mittels des Tragrahmens, mittels eines Hauptgelenkes um zwei normale aufeinander stehende Achsen, z.B. eine horizontale Achse und eine vertikale Achse, welche sich in dem Hauptgelenk schneiden, verschwenkbar gelagert ist, und wobei das optisch relevante Bauteil bzw. sein Tragrahmen mittels eines Verschwenkelement-Gelenkes an einem Verschwenkelement gelenkig gelagert ist, und wobei das Verschwenkelement über ein Gleitelement-Gelenk an einem Gleitelement gelenkig gelagert ist, wobei das Gleitelement-Gelenk und das Hauptgelenk eine Verschwenkachse für das optisch relevante Bauteil bzw. seinen Tragrahmen definieren, und wobei Verstellmittel zum Verschwenken des Verschwenkelementes in Bezug auf das Gleitelement um die von dem Gleitelement-Gelenk und dem Hauptgelenk gebildete Achse vorgesehen sind, und wobei Gleitelement-Verstellmittel zum Verschieben des Gleitelementes in Bezug auf das Gehäuse des Fahrzeugscheinwerfers vorgesehen sind, und wobei Kupplungsmittel vorgesehen sind, welche bei einem Verschieben des Gleitelementes das Verschwenkelement, in seiner Position in Bezug auf das Gleitelement unverändert, mitnehmen.

Das optisch relevante Bauteil bzw. dessen Tragrahmen ist einerseits an der Verstellvorrichtung an einem Verschwenkelement und dieses Verschwenkelement an einem Gleitelement gelenkig gelagert. Andererseits ist der Tragrahmen bzw. das optisch relevante Bauteil mittels eines dritten Gelenkes, vorzugsweise eines Kugelgelenkes, in Bezug auf ein Scheinwerfergehäuse gelenkig gelagert.

Durch Verstellen, d.h. Verschieben des Gleitelementes, wozu nur das Betätigen eines einzigen Betätigungselementes etwa durch Drehen einer entsprechenden Drehschraube notwendig ist, wird das Gleitelement verschoben und nimmt mit den Kupplungsmitteln das Verstellelement mit, ohne dass dieses seine Position in Bezug auf das Gleitelement ändert. Auf diese Weise ist ein Verschwenken um eine erste Achse durch das Hauptgelenk möglich.

Betätigt man eine weitere z.B. Drehschraube, so wird das Verschwenkelement um das Gelenk, mit welchem es an dem Gleitelement befestigt ist, um eine zweite Achse, welche durch dieses Gelenk und das Hauptgelenk verläuft, verschwenkt.

Die Erfindung weist einen einfachen und robusten Aufbau aus wenigen Teilen auf und es kann eine Einstellung um zwei Achsen durch unabhängiges Einstellen an z.B. zwei Drehschrauben erfolgen. Der kompakte und einfache Aufbau erlaubt es auch, dass die Drehschrauben nahe beieinander liegen, sodass eine komfortable Verstellung möglich ist und kein Hantieren an unterschiedlichen Stellen im Fahrzeug notwendig ist.

Gegenüber der in der DE 10 2008 033 515 A1 geoffenbarten Vorrichtung lässt sich mit der Erfindung ein wesentlich stabileres System realisieren, mit welchem die im Betrieb auftretenden Schwingungen und Vibrationen sehr gut kompensiert werden können. Die Mechanik weist außerdem einen vergleichsweise einfachen Aufbau auf und die Verwendung von komplizierten und teuren Schneckengetrieben, wie in der DE 10 2008 033 515 A1 vorgesehen, ist nicht notwendig.

Zum Verschwenken des optisch relevanten Bauteils bzw. des Tragrahmens ist vorgesehen, dass die Gleitelement-Verstellmittel eine Primärwelle umfassen, welche in dem Gehäuse drehbar gelagert ist, wobei ein Gewinde auf der Primärwelle mit einem korrespondierenden Gewinde in einer Gewindeschale auf dem Gleitelement zusammenwirkt.

Durch Verdrehen der Primärwelle, welche dabei in axialer Richtung ihre Position nicht verändert, bewegt sich Gewindeschale und somit das Gleitelement entsprechend der Drehrichtung entlang der Primärwelle vor oder zurück, das Verschwenkelement-Gelenk wird dabei entsprechend in einer linearen Bewegung mitgenommen, und das Bauteil (Linse) bzw. der Tragrahmen wird um eine Achse, nämlich die vertikale Achse verschwenkt.

Weiters ist vorgesehen, dass die Verstellmittel zum Verschwenken des Verschwenkelementes eine Sekundärwelle, welche in dem Gleitelement drehbar gelagert ist, sowie eine Gewindeschale, vorzugsweise eine Gewindehalbschale, umfassen, wobei ein Gewinde der Gewindeschale mit einem korrespondierenden Gewinde der Sekundärwelle zusammenwirkt, wobei die Gewindeschale mit dem Verschwenkelement verbunden, z.B. mit diesem einstückig ausgebildet ist. Eine Gewindehalbschale ist für einen einfachen Zusammenbau der Vorrichtung von Vorteil.

Bei einem Verdrehen der Sekundärwelle wird das Verschwenkelement an dem Gleitelement, welches in diesem Fall seine Position nicht ändert, um das Gleitelement-Gelenk verschwenkt. Durch das Hauptgelenk ist gemeinsam mit dem Gleitelement-Gelenk die vorzugsweise horizontale Achse definiert, um welche das Verschwenkelement und entsprechend das an dem Verschwenkelement über das Verschwenkelement-Gelenk gelenkig verbundene optische Bauteil bzw. der Tragrahmen verschwenkt wird.

Damit einerseits ein Verdrehen der Sekundärwelle und somit ein Verschwenken des Verschwenkelementes möglich wird, andererseits aber auch das Gleitelement verschoben werden kann, wobei gleichzeitig das Verschwenkelement und entsprechend auch die Sekundärwelle linear mitgenommen wird, ist es weiters von Vorteil, wenn die Sekundärwelle in einem Verstellrad, mittels welchem die Sekundärwelle verdrehbar ist, entlang ihrer Drehachse axial verschieblich gelagert ist.

Von besonderem Vorteil ist es, wenn das Verstellrad ein Kegelrad ist. In diesem Fall wird es durch die schräg verlaufenden Zähne auf der Kegeloberfläche möglich, dass eine Verstellwelle mit korrespondierenden Zähnen schräg zu der Sekundärwelle verläuft und nicht in einer Achse zu dieser oder parallel dazu verlaufen muss, was Vorteile beim Anordnen der Verstellwelle im Gehäuse bietet, wo in der Regel der Bauraum relativ beengt ist.

Weiters ist es aus oben genannten Gründen ebenfalls von Vorteil, wenn zum Verdrehen der Primärwelle ein Verstellrad, vorzugsweise ein Kegelrad vorgesehen ist.

Dieses Kegelrad ist mit der Primärwelle vorzugsweise fix verbunden. Weiters kann in Analogie zu dem Kegelrad der Sekundärwelle auf dem Kegelrad noch eine Drehschraube befestigt, z.B. aufgeklipst sein.

Bei einer konkreten und einfach zu realisierenden Variante der Erfindung ist weiters vorgesehen, dass die Kupplungsmittel in Form von zwei Mitnahmeabschnitten an dem Gleitelement sowie zwei korrespondierenden Mitnahmeabschnitten an der Sekundärwelle ausgebildet sind.

Bei den korrespondieren Mitnahmeabschnitten handelt es sich beispielsweise um zwei scheibenartige Verbreiterungen der Sekundärwelle, d.h. um zwei Scheiben, welche über die Oberfläche der Sekundärwelle überstehen, und welche an entsprechenden Mitnahmeabschnitten an dem Gleitelement anliegen, von welchen sie bei einem Verschieben des Gleitelementes mitgenommen werden.

Bei einer konkreten Ausführungsform der erfindungsgemäßen Vorrichtung ist vorgesehen, dass die beiden Mitnahmeabschnitte der Sekundärwelle jeweils anschließend an den Abschnitt mit dem Gewinde der Sekundärwelle an der Sekundärwelle angeordnet sind.

Üblicherweise erfolgt eine Einstellung des optisch relevanten Bauteiles, d.h. ein Verschwenken, um eine horizontale und eine vertikale Achse (horizontal und vertikal beziehen sich auf den eingebauten Zustand des Fahrzeugscheinwerfers in ein Fahrzeug).

Entsprechend ist bei einer konkreten Variante der Erfindung vorgesehen, dass das Gleitelement in im Wesentlichen horizontaler Richtung linear verschiebbar ist.

Das Hauptgelenk liegt in etwa in einer horizontalen Ebene gemeinsam mit dem Gleitelement-Gelenk und das Verschwenkelement-Gelenk liegt in einer Vertikalebene oberhalb (auch unterhalb möglich) des Gleitelement-Gelenkes.

Durch das Verschieben des Gleitelementes in horizontaler Richtung und einem entsprechenden Verschieben des optisch relevanten Bauteils bzw. seines Tragrahmens wird das Bauteil bzw. der Tragrahmen dementsprechend um eine vertikale Achse durch das Hauptgelenk verschwenkt.

Ein Verschwenken um die horizontale Achse wird durch Verschwenken des Verschwenkelementes um das Gleitelement-Gelenk und das Hauptgelenk realisiert.

Im Folgenden ist die Erfindung an Hand der Zeichnung näher erläutert. In dieser zeigt
Fig. 1 einen Teil eines Fahrzeugscheinwerfers mit einer erfindungsgemäßen Verstellvorrichtung in einer perspektivischen Vorderansicht,
Fig. 2 eine weitere perspektivische Ansicht des Fahrzeugscheinwerfers aus Figur 1 mit abgenommener Linse und ohne Gehäuse,
Fig. 3 den Fahrzeugscheinwerfer in einer Darstellung analog zu Figur 2, in einer Perspektive analog zu Figur 1,
Fig. 4 eine Detailansicht der Verstellmittel zum Verstellen des optisch relevanten Bauteils um zwei Achsen, und
Fig. 5 die Detailansicht aus Figur 4 in einer teilweise geschnittenen Darstellung.

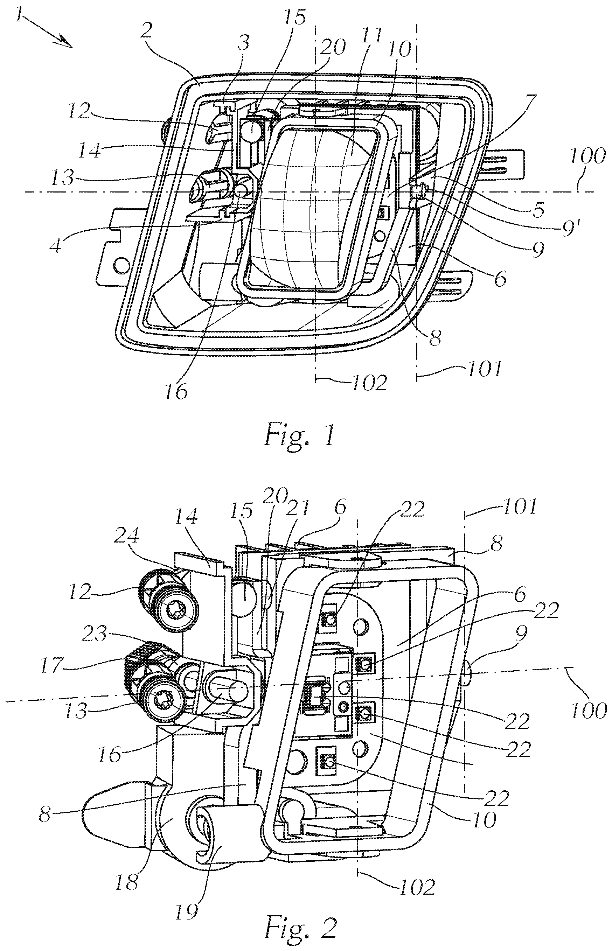

Figur 1 zeigt einen Teil eines Fahrzeugscheinwerfers 1, bei welchem ein optisch relevantes Bauteil, hier eine Linse 11, in einem Gehäuse 2 des Fahrzeugscheinwerfers 1 um eine im eingebauten Zustand des Scheinwerfers horizontale Achse 100, welche in etwa normal auf die optische Achse des Scheinwerfers steht, und um eine vertikale Achse 101 verschwenkbar ist. Die Linse 11 ist dazu in einem Linsenhalter 10 befestigt, welcher wiederum in dem Tragrahmen 8 gelagert ist, und der Tragrahmen 8 ist in dem Gehäuse 2 verschwenkbar gelagert. Die Linse 11 selbst ist über den Linsenhalter 10 in dem Tragrahmen 8 noch um eine weitere vertikale Achse 102 verschwenkbar gelagert, z.B. zur Realisierung eines dynamischen Kurvenlichtes.

Zum Verschwenken um die Achse 102 ist ein Stellmotor 18 vorgesehen, welcher über ein Lager 18 auf den Linsenhalter 10 einwirkt, wie dies in Figur 2 zu erkennen ist. Figur 2 zeigt eine andere Perspektive des Scheinwerfers 1 mit abgenommener Linse 11.

Die Linse kann aber auch fix in dem Tragrahmen montiert sein (nicht dargestellt), in diesem Fall entfallen der Stellmotor 18 und das Lager 19, auch ein Linsenhalter ist dann nicht unbedingt notwendig, kann aber zweckmäßig sein.

Die Erfindung betrifft nun eine Verstellvorrichtung zum Verstellen eines optisch relevanten Bauteils, in diesem Fall der Linse 11, um die horizontale Achse 100 und die vertikale Achse 101.

Dazu ist der Tragrahmen 8, in welchem die Linse 11 gelagert ist, mittels eines Hauptgelenkes 9, 9' um die beiden normal aufeinander stehenden Achsen 100, 101, welche sich in dem Hauptgelenk 9, 9' schneiden, verschwenkbar gelagert. Die Darstellung in den Figuren, insbesondere Figuren 1 - 3 ist bezüglich des Hauptgelenkes 9, 9', die hier als Zapfen 9 und Aufnahme 9' für den Zapfen gezeigt sind, als rein schematisch anzusehen. Von Vorteil ist es, wenn das Hauptgelenk als Kugelgelenk ausgebildet ist, mit z.B. einer Kugel (entsprechend Bezugszeichen 9) und einer Kugelpfanne (entsprechend Bezugszeichen 9').

Der Tragrahmen 8 ist nun mittels eines Verschwenkelement-Gelenkes 21 an einem Verschwenkelement 20 gelenkig gelagert, und das Verschwenkelement 20 wiederum ist über ein Gleitelement-Gelenk 30 an einem Gleitelement 14 gelenkig gelagert, sodass der Tragrahmen 8 über das Verschwenkelement 20 am Gleitelement 14 gelagert ist.

Das Gleitelement-Gelenk 30 und das Hauptgelenk 9, 9' definieren die horizontale Verschwenkachse 100 für den Tragrahmen 8.

Die Gelenke sind dabei in den Figuren nur schematisch dargestellt, Das Gelenk 21 besteht z.B. in der Realität aus einer Lagerkugel, die am Tragrahmen 8 angeformt ist, diese Lagerkugel ist in einer entsprechenden Öffnung im Abschnitt 21 gelagert. Der Einfachheit halber wird aber in diesem Text immer vom Gelenk 21 gesprochen.

Die vorliegende Vorrichtung ist insbesondere zur Einstellung der Grundeinstellung des Scheinwerfers vorgesehen. Die hierbei auftretenden Verstellwege sind üblicherweise eher gering, d.h. es handelt sich hier um typische Verschwenkbereiche von wenigen 1/10° im Lichtbild, in der Regel sind dies auf jeden Fall ≤ 3°. Die auftretenden Verwindungen können problemlos von den Bestandteilen der Verstellvorrichtung aufgenommen werden, bzw. können die Gelenke entsprechend ausgebildet sein, dass die auftretenden Bewegungen aufgenommen werden können. Beispielsweise kann das Gelenk 30, also die Öffnung in dem Abschnitt 30, die für eine an dem Tragrahmen 8 angeformte Lagerkugel, die in der Öffnung gelagert ist, vorgesehen ist, als Langloch ausgebildet sein.

Zum Verschwenken des Verschwenkelementes 20 in Bezug auf das Gleitelement 14 sind Verstellmittel 15, 27 vorgesehen, mittels welcher das Verschwenkelement 20 um die von dem Gleitelement-Gelenk 30 und dem Hauptgelenk 9, 9' gebildete Achse 100 an dem Gleitelement 14 geschwenkt werden kann, wodurch der Tragrahmen 8 und somit die Linse 11 um diese Achse 100 geschwenkt wird.

Außerdem sind Gleitelement-Verstellmittel 16, 16' zum Verschieben des Gleitelementes 14 in Bezug auf das Gehäuse 2 des Fahrzeugscheinwerfers 1 vorgesehen. Bei dem gezeigten Beispiel liegt das Hauptgelenk in etwa in einer horizontalen Ebene gemeinsam mit dem Gleitelement-Gelenk 30 und das Verschwenkelement-Gelenk 21 liegt in einer Vertikalebene oberhalb des Gleitelement-Gelenkes 30. Damit ein Verschenken um die vertikale Achse 101 möglich ist, ist das Gleitelement in einer horizontalen Ebene und in Richtung normal auf die von den Achsen 100 und 101 aufgespannt Ebene linear verschiebbar. Dazu sind Führungen für das Gleitelement 14, im gezeigten Beispiel (Figur 1) eine obere Führung 3 und eine untere Führung 4, vorgesehen, in welchen das Gleitelement geführt ist.

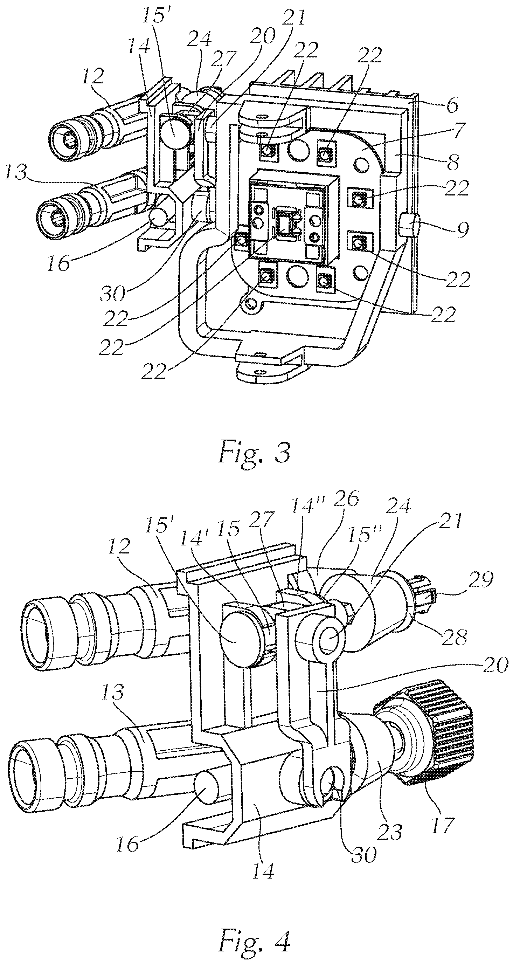

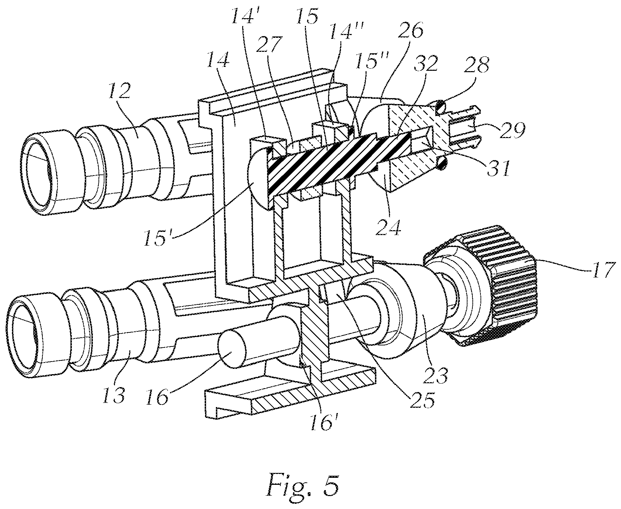

Schließlich sind, wie Figur 4 und 5 gut zeigen, noch Kupplungsmittel 14', 14", 15', 15" vorgesehen, welche bei einem Verschieben des Gleitelementes 14 das Verschwenkelement 20, in seiner Position in Bezug auf das Gleitelement 14 unverändert, mitnehmen.

Das optisch relevante Bauteil (Linse 11) bzw. dessen Tragrahmen 8 ist somit einerseits an der Verstellvorrichtung an einem Verschwenkelement 20 und andererseits über das Verschwenkelement an dem Gleitelement 14 gelagert, und durch die Kupplungsmittel kann, wie später noch erläutert, das Verschwenkelement 20 und somit der Tragrahmen 8 unter bestimmten Bedingungen praktisch fix mit dem Gleitelement 14 verbunden sein.

Durch das Verschieben des Gleitelementes in horizontaler Richtung wird daher entsprechend der Tragrahmen 8 verschoben und dementsprechend wird der Tragrahmen 8 um die vertikale Achse 101 durch das Hauptgelenk 9, 9' verschwenkt, das Verschwenkelement 20 ist beim Verstellen des Gleitelementes 14 fix mit dem Gleitelement 14 verbunden.

Ein Verschwenken um die horizontale Achse 100 wird durch Verschwenken des Verschwenkelementes 20 um das Gleitelement-Gelenk 30 und das Hauptgelenk 9, 9' realisiert, in diesem Fall ist das Gleitelement 14 unbewegt.

Wie den Figuren, insbesondere Figuren 3 - 5 entnommen werden kann, umfassen bei dem gezeigten Beispiel die Gleitelement-Verstellmittel eine Primärwelle 16, welche in dem Gehäuse 2 drehbar gelagert ist, wobei ein Gewinde auf der Primärwelle 16 mit einem korrespondierenden Gewinde in einer Gewindeschale 16' auf dem Gleitelement 14 zusammenwirkt.

Durch Verdrehen der Primärwelle 16, welche dabei in axialer Richtung ihre Position nicht verändert, bewegt sich Gewindeschale 16' und somit das Gleitelement 14 entsprechend der Drehrichtung entlang der Primärwelle vor oder zurück, das Verschwenkelement-Gelenk 21 wird dabei entsprechend in einer linearen Bewegung mitgenommen, und der Tragrahmen 8 und die Linse 11 werden um die vertikale Achse 101 verschwenkt.

Außerdem ist diesen Figuren zu entnehmen, dass die Verstellmittel zum Verschwenken des Verschwenkelementes 20 eine Sekundärwelle 15 umfassen, welche in dem Gleitelement 14 drehbar gelagert ist, sowie weiters eine Gewindeschale umfassen, vorzugsweise eine Gewindehalbschale 27, wobei ein Gewinde der Gewindehalbschale 27 mit einem korrespondierenden Gewinde der Sekundärwelle 15 zusammenwirkt, und wobei die Gewindehalbschale 27 mit dem Verschwenkelement 20 verbunden, z.B. mit diesem einstückig ausgebildet ist.

Eine Gewindehalbschale 27 ist für einen einfachen Zusammenbau der Vorrichtung von Vorteil.

Bei einem Verdrehen der Sekundärwelle 15 wird das Verschwenkelement 20 an dem Gleitelement 14, welches in diesem Fall seine Position nicht ändert, um das Gleitelement-Gelenk 30 verschwenkt. Dazu bewegt sich die Gewindehalbschale 27 je nach Drehrichtung der Sekundärwelle 15, die an dem Gleitelement 14 unverschieblich gelagert ist, an der Sekundärwelle 15 entlang (und entsprechend auch in Bezug auf das Gleitelement 14) vor oder zurück. Durch die gelenkige Lagerung des Verschwenkelementes 20 über das Gelenk 21 an dem Gleitelement 14 ist diese Bewegung möglich, und der Tragrahmen wird um die horizontale Achse 100 verschwenkt.

Zum Verstellen der Primärwelle 16 und der Sekundärwelle 15 wird eine Handhabe benötigt, mit welcher die Wellen verdrehbar sind.

Dazu ist bei dem gezeigten Beispiel die Primärwelle 16 mit einer Drehschraube/einem Einstellrad 17 starr verbunden. Über dieses kann die Primärwelle 16 verdreht werden. (Siehe Figuren 4 und 5)

Eine solche Drehschraube bzw. ein Einstellrad für die Sekundärwelle 15 kann ebenfalls vorgesehen sein, ist in den Figuren allerdings nicht dargestellt.

Der Vorteil solcher Drehschrauben im hinteren Bereich des Fahrzeugscheinwerfers ist, dass diese von Außen im eingebauten Zustand nicht sichtbar sind, diese eignen sich zum Einstellen aber nur, wenn genügend Bauraum für solche Drehschrauben vorhanden ist.

Bei dem gezeigten Beispiel ist weiters noch vorgesehen, dass zum Verdrehen der Primärwelle ein Verstellrad, vorzugsweise in Form eines Kegelrades 23 vorgesehen ist. Dieses Kegelrad 23 ist mit der Primärwelle 16 fix verbunden. Auf dieses Kegelrad 23 kann die Drehschraube 17 aufgeklipst oder anderweitig befestigt sein.

Nach dem Anbringen der Drehschraube 17, welche auch klemmend angebracht werden kann, ist die Primärwelle 16 mittels des Kegelrades 23 und der Drehschraube 17 in dem Gehäuse drehbar und axial unverschieblich gelagert.

Durch die schräg verlaufenden Zähne auf der Kegeloberfläche des Kegelrades 23 ist es möglich, dass eine Verstellwelle 13 mit korrespondierenden Zähnen schräg zu der Sekundärwelle verläuft und nicht in einer Achse zu dieser oder parallel dazu verlaufen muss, was Vorteile beim Anordnen der Verstellwelle im Gehäuse bietet, wo in der Regel der Bauraum relativ beengt ist. Die Verstellwelle 13 kann dann auch in einem vorderen Bereich des Gehäuses 2 zugänglich sein, wodurch eine einfachere Bedienung möglich wird.

Damit diese Verstellwelle 13 nicht sichtbar ist, muss sie in der Regel mit einer Blende abgedeckt werden, welche zum Verstellen entfernt werden muss.

Analog ist Sekundärwelle 15 mit einem Verstellrad 24 verbunden, mittels welchem die Sekundärwelle 15 verdrehbar ist. Wiederum ist mit Vorteil das Verstellrad ein Kegelrad 24, an welchem eine Verstellwelle 12 angreift.

Die Sekundärwelle ist in dem Verstellrad 24 in einer Öffnung 31 mit einem korrespondieren Sekundärwellen-Abschnitt 32 verdrehfest, aber in axialer Richtung verschiebbar gelagert. Beispielsweise ist der Sekundärwellen-Abschnitt 32 als Sechskant- oder Vierkant-Zapfen mit einem 6- oder vierkantigen Querschnitt ausgebildet, einen entsprechenden Querschnitt weist die Öffnung 31 auf. Bei einem Verdrehen des Verstellrades 24 wird die Sekundärwelle 15 mitgedreht, ein Verschieben der Sekundärwelle 15 in der Öffnung ist aber möglich.

Eine Dichtung 28 zwischen Kegelrad 24 und Gehäuse 2 ist in den Figuren noch dargestellt, diese ist beispielsweise als O-Ring ausgebildet.

Mit einem Befestigungsklips 29 auf dem Kegelrad 24 wird dieses verdrehbar aber axial unverschieblich im Gehäuse zu gelagert. Im Bereich des Klips 29 kann eine Drehschraube in Analogie zu der Drehschraube 17 befestigt sein.

In den Figuren 4 und 5 sind schließlich noch die eingangs bereits erwähnten Kupplungsmittel näher beschrieben. Bei der gezeigten Ausführungsform sind diese Kupplungsmittel in Form von zwei Mitnahmeabschnitten 14', 14" an dem Gleitelement 14 sowie zwei korrespondierenden Mitnahmeabschnitten 15', 15" an der Sekundärwelle 15 ausgebildet.

Bei den korrespondieren Mitnahmeabschnitten 15', 15" handelt es sich beispielsweise um zwei scheibenartige Verbreiterungen der Sekundärwelle 15, d.h. um zwei Scheiben 15', 15", welche über die Oberfläche der Sekundärwelle überstehen, und welche an entsprechenden Mitnahmeabschnitten 14', 14" an dem Gleitelement anliegen, von welchen sie bei einem Verschieben des Gleitelementes mitgenommen werden.

Die Mitnahmeabschnitte 14', 14" weisen jeweils eine Öffnung auf, in welchen die Sekundärwelle 15 drehbar gelagert ist, und die beiden Mitnahmeabschnitte 15', 15" der Sekundärwelle sind anschließend an den Abschnitt mit dem Gewinde der Sekundärwelle 15 und jeweils außerhalb der beiden Mitnahmeabschnitte 14', 14" des Gleitelementes an der Sekundärwelle 15 angeordnet.

## Patentansprüche

1. Verstellvorrichtung zum Verstellen von zumindest einem optisch relevanten Bauteil eines Fahrzeugscheinwerfers (1), wie z.B. eines Reflektors, einer Linse (11) oder eines Lichtmoduls des Fahrzeugscheinwerfers (1), bzw. zum Verstellen eines das zumindest eine optisch relevante Bauteil aufnehmenden Tragrahmens (8), wobei das optisch relevante Bauteil, beispielsweise mittels des Tragrahmens (8), mittels eines Hauptgelenkes (9, 9') um zwei normale aufeinander stehende Achsen, z.B. eine horizontale Achse (100) und eine vertikale Achse (101), welche sich in dem Hauptgelenk (9, 9') schneiden, verschwenkbar gelagert ist, wobei ein Verschwenkelement (20) über ein Gleitelement-Gelenk (30) an einem Gleitelement (14) gelenkig gelagert ist, wobei das Gleitelement-Gelenk (30) und das Hauptgelenk (9, 9') eine Verschwenkachse (100) für das optisch relevante Bauteil bzw. seinen Tragrahmen (8) ausbilden, und wobei Verstellmittel (15, 27) zum Verschwenken des Verschwenkelementes (20) in Bezug auf das Gleitelement (14) um die von dem Gleitelement-Gelenk (30) und dem Hauptgelenk (9, 9') gebildete Achse (100) vorgesehen sind, und wobei Gleitelement-Verstellmittel (16, 16') zum Verschieben des Gleitelementes (14) in Bezug auf das Gehäuse (2) des Fahrzeugscheinwerfers (1) vorgesehen sind, **dadurch gekennzeichnet, dass** das optisch relevante Bauteil bzw. sein Tragrahmen (8) mittels eines Verschwenkelement-Gelenkes (21) an dem Verschwenkelement (20) gelenkig gelagert ist, und dass Kupplungsmittel (14', 14", 15', 15") vorgesehen sind, welche bei einem Verschieben des Gleitelementes (14) das Verschwenkelement (20), in seiner Position in Bezug auf das Gleitelement (14) unverändert, mitnehmen.

2. Vorrichtung nach Anspruch 1, **dadurch gekennzeichnet, dass** das Hauptgelenk (9, 9') ein Kugelgelenk ist.

3. Vorrichtung nach Anspruch 1 oder 2, **dadurch gekennzeichnet, dass** die Gleitelement-Verstellmittel eine Primärwelle (16) umfassen, welche in dem Gehäuse (2) drehbar gelagert ist, wobei ein Gewinde auf der Primärwelle (16) mit einem korrespondierenden Gewinde in einer Gewindeschale (16') auf dem Gleitelement (14) zusammenwirkt.

4. Vorrichtung nach einem der Ansprüche 1 bis 3, **dadurch gekennzeichnet, dass** die Verstellmittel zum Verschwenken des Verschwenkelementes (20) eine Sekundärwelle (15), welche in dem Gleitelement (14) drehbar gelagert ist, sowie eine Gewindeschale, vorzugsweise eine Gewindehalbschale (27), umfassen, wobei ein Gewinde der Gewindeschale mit einem korrespondierenden Gewinde der Sekundärwelle (15) zusammenwirkt, wobei die Gewindeschale mit dem Verschwenkelement (20) verbunden, z.B. mit diesem einstückig ausgebildet ist.

5. Vorrichtung nach Anspruch 4, **dadurch gekennzeichnet, dass** die Sekundärwelle (15) in einem Verstellrad (24), mittels welchem die Sekundärwelle (15) verdrehbar ist, entlang ihrer Drehachse axial verschieblich gelagert ist.

6. Vorrichtung nach Anspruch 5, **dadurch gekennzeichnet, dass** das Verstellrad ein Kegelrad (24) ist.

7. Vorrichtung nach einem der vorgenannten Ansprüche mit Anspruch 3, **dadurch gekennzeichnet, dass** zum Verdrehen der Primärwelle ein Verstellrad, vorzugsweise ein Kegelrad (23) vorgesehen ist.

8. Vorrichtung nach einem der vorgenannten Ansprüche mit Anspruch 4, **dadurch gekennzeichnet, dass** die Kupplungsmittel in Form von zwei Mitnahmeabschnitten (14', 14") an dem Gleitelement (14) sowie zwei korrespondierenden Mitnahmeabschnitten (15', 15") an der Sekundärwelle (15) ausgebildet sind.

9. Vorrichtung nach Anspruch 8, **dadurch gekennzeichnet, dass** die beiden Mitnahmeabschnitte (15', 15") der Sekundärwelle jeweils anschließend an den Abschnitt mit dem Gewinde der Sekundärwelle (15) an dieser angeordnet sind.

10. Vorrichtung nach einem der Ansprüche 1 bis 9, **dadurch gekennzeichnet, dass** das Gleitelement (14) in im Wesentlichen horizontaler Richtung linear verschiebbar ist.

11. Fahrzeugscheinwerfer mit zumindest einer Vorrichtung nach einem der Ansprüche 1 bis 10.

## Claims

1. Adjustment device for adjusting at least one optically relevant component of a vehicle headlight (1), such as a reflector, a lens (11) or a light module of the vehicle headlight (1), or for adjusting a support frame (8) which accommodates the at least one optically relevant component, wherein the optically relevant component is mounted, by means of the support frame (8) for example, so as to be pivotable by means of a main articulated joint (9, 9') about two axes aligned normally to each other, e.g., a horizontal axis (100) and a vertical axis (101) which intersect in the main articulated joint (9, 9'), wherein a pivoting element (20) is attached in hinged manner to a sliding element (14) via a sliding element articulated joint (30), wherein the sliding element articulated joint (30) and the main articulated joint (9, 9') form a swivel axis (100) for the optically relevant component and/or its support frame (8), and wherein adjustment means (15, 27) are provided for pivoting the pivoting element (20) about the axis (100) formed by the sliding element articulated joint (30) and the main articulated joint (9, 9') relative to the sliding element (14), and wherein sliding element adjustment means (16, 16') are provided for displacing the sliding element (14) relative to the housing (2) of the vehicle headlight (1), **characterized in that** the optically relevant component and/or its support frame (8) is attached in hinged manner to pivoting element (20) via a pivoting element articulated joint (31), and that coupling means (14', 14", 15', 15") are provided that entrain the pivoting element (20) so that its position relative to the sliding element (14) remains unchanged when the sliding element (14) is displaced.

2. Device according to Claim 1, **characterized in that** the main articulated joint (9, 9') is a ball joint.

3. Device according to Claim 1 or 2, **characterized in that** the sliding element adjusting means comprise a primary shaft (16) which is mounted to as to be rotatable in the housing (2), wherein a thread on the primary shaft (16) cooperates with a corresponding thread in a threaded shell (16') on the sliding element (14).

4. Device according to any one of Claims 1 to 3, **characterized in that** the adjusting means for pivoting the pivoting element (20) comprise a secondary shaft (15) which is mounted rotatably in the sliding element (14), and a threaded shell, preferably a threaded half-shell (27), wherein a thread of the threaded shell cooperates with a corresponding thread of the secondary shaft (15), wherein said threaded shell is connected to the pivoting element (20) or formed integrally therewith.

5. Device according to Claim 4, **characterized in that** the secondary shaft (15) is mounted in an adjusting wheel (24) so as to be displaceable axially along its axis of rotation, by means of which wheel the secondary shaft (15) is rotatable.

6. Device according to Claim 5, **characterized in that** the adjusting wheel is a bevel gear (24).

7. Device according to any one of the preceding claims with Claim 3, **characterized in that** an adjusting wheel, preferably a bevel gear (25) is provided for rotating the primary shaft.

8. Device according to any one of the preceding claims with Claim 4, **characterized in that** the coupling means in the form of two entrainment sections (14', 14") on the sliding element (14) and two corresponding entrainment sections (15', 15") are formed on the secondary shaft (15).

9. Device according to Claim 8, **characterized in that** the two entrainment sections (15', 15") of the secondary shaft are each arranged on the secondary shaft (15) adjacently to the section with the thread thereof.

10. Device according to any one of Claims 1 to 9, **characterized in that** the sliding element (14) is linearly displaceable in a substantially horizontal direction.

11. Vehicle headlight having at least one device according to any one of Claims 1 to 10.

## Revendications

1. Dispositif de réglage pour le réglage d'au moins un composant optiquement pertinent d'un phare de véhicule (1), comme par exemple un réflecteur, une lentille (11) ou un module lumineux du phare de véhicule (1), ou pour le réglage d'un cadre de support (8) recevant l'au moins un composant optiquement pertinent, le composant optiquement pertinent étant monté de façon pivotante, par exemple au moyen du cadre de support (8), au moyen d'une articulation principale (9, 9') autour de deux axes se situant perpendiculairement l'un à l'autre, par exemple un axe horizontal (100) et un axe vertical (101), lesquels se coupent dans l'articulation principale (9, 9'), un élément de pivotement (20) étant monté de façon articulée par l'intermédiaire d'une articulation d'élément de glissement (30) sur un élément de glissement (14), l'articulation d'élément de glissement (30) et l'articulation principale (9, 9') formant un axe de pivotement (100) pour le composant optiquement pertinent ou son cadre de support (8), et des moyens de réglage (15, 27) étant prévus pour le pivotement de l'élément de pivotement (20) par rapport à l'élément de glissement (14) autour de l'axe (100) formé par l'articulation d'élément de glissement (30) et l'articulation principale (9, 9'), et des moyens de réglage d'élément de glissement (16, 16') étant prévus pour le déplacement de l'élément de glissement (14) par rapport au boîtier (2) du phare de véhicule (1), **caractérisé par le fait que** l'élément optiquement pertinent ou son cadre de support (8) est monté de façon articulée sur l'élément de pivotement (20) au moyen d'une articulation d'élément de pivotement (21) et que des moyens de couplage (14', 14", 15', 15") sont prévus, lesquels, lors d'un déplacement de l'élément de glissement (14) entraînent l'élément de pivotement (20) inchangé dans sa position par rapport à l'élément de glissement (14).

2. Dispositif selon la revendication 1, **caractérisé par le fait que** l'articulation principale (9, 9') est une articulation à rotule.

3. Dispositif selon l'une des revendications 1 ou 2, **caractérisé par le fait que** les moyens de réglage d'élément de glissment comprennent un arbre primaire (16), lequel est monté apte à tourner dans le boîtier (2) un filetage sur l'arbre primaire (16) coopérant avec un filetage correspondant dans une coque filetée (16') sur l'élément de glissement (14).

4. Dispositif selon l'une des revendications 1 à 3, **caractérisé par le fait que** les moyens de réglage pour le pivotement de l'élément de pivotement (20) comportent un arbre secondaire (15), lequel est monté apte à tourner dans l'élément de glissement (14), ainsi qu'une coque filetée, de préférence, une demi-coque filetée (27), un filetage de la coque filetée coopérant avec un filetage correspondant de l'arbre secondaire (15), la coque filetée étant réalisée liée avec l'élément de pivotement (20), par exemple d'un seul tenant avec celui-ci.

5. Dispositif selon la revendication 4, **caractérisé par le fait que** l'arbre secondaire (15) est monté déplaçable axialement le long de son axe de rotation dans une roue de réglage (24), au moyen de laquelle l'arbre secondaire (15) est apte à tourner.

6. Dispositif selon la revendication 5, **caractérisé par le fait que** la roue de réglage est une roue conique (24).

7. Dispositif selon l'une des revendications précédentes avec la revendication 3, **caractérisé par le fait que,** pour la rotation de l'arbre primaire, une roue de réglage, de préférence, une roue conique (23), est prévue.

8. Dispositif selon l'une des revendications précédentes avec la revendication 4, **caractérisé par le fait que** les moyens de couplage sont réalisés sous la forme de deux parties d'entraînement (14', 14") sur l'élément de glissement (14) ainsi que deux parties d'entraînement (15', 15") correspondantes sur l'arbre secondaire (15).

9. Dispositif selon la revendication 8, **caractérisé par le fait que** les deux parties d'entraînement (15', 15") de l'arbre secondaire sont disposés chacune après la partie avec le filetage de l'arbre secondaire (15) sur celui-ci.

10. Dispositif selon l'une des revendications 1 à 9, **caractérisé par le fait que** l'élément de glissement (14) est déplaçable linéairement en direction sensiblement horizontale.

11. Phare de véhicule comportant au moins un dispositif selon l'une des revendications 1 à 10.
